# EUROPEAN PATENT APPLICATION

(11) **EP 4 641 796 A1**
(43) Date of publication of application: **29.10.2025**
(21) Application number: 23935171.1
(22) Date of filing: 26.12.2023
(51) Int. Cl.: H01M 50/289, H01M 50/474, H01M 10/04

(54) **BATTERY CELL, BATTERY AND ELECTRIC DEVICE**

(30) Priority: 24.04.2023 CN 202310446541
(71) Applicant: Contemporary Amperex Technology Co., Limited, Ningde, Fujian 352100 (CN)
(72) Inventor: LI, Xuan, Ningde, Fujian 352100 (CN); CHEN, Xingbu, Ningde, Fujian 352100 (CN); LING, Yangfang, Ningde, Fujian 352100 (CN); YUN, Liang, Ningde, Fujian 352100 (CN); YIN, Ziyi, Ningde, Fujian 352100 (CN); WU, Lili, Ningde, Fujian 352100 (CN); SUN, Xin, Ningde, Fujian 352100 (CN)
(74) Representative: von Tietzen und Hennig, Nikolaus
(86) International application number: PCT/CN2023/141927
(87) International publication number: WO 2024/222005

(57) **Abstract**

Provided in the present application are a battery cell, a battery, and an electric device. The battery cell includes a casing, an electrode assembly, and a support member. The casing is provided with an accommodation cavity. The electrode assembly is disposed in the accommodation cavity and includes a first electrode plate and a second electrode plate arranged according to a preset order in a first direction, the first electrode plate including a first portion overlapping the second electrode plate and a second portion extending beyond the second electrode plate. At least part of the support member is disposed between the electrode assembly and the casing in the first direction, a bending strength of the support member is greater than a bending strength of the first electrode plate, and a projection of the support member in the first direction covers a projection of the second portion in the first direction.

## Description

### CROSS REFERENCE

The present application makes reference to Chinese Patent Application No. 202310446541.6 filed on April 24, 2023 and entitled "Battery Cell, Battery, and Electric device", which is incorporated herein by reference in its entirety.

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

An electrode assembly may swell during the use of a battery in charge and discharge. Particularly, a high-expansion material is used as a negative electrode active material to increase an energy density of the battery, making the problem of expansion of the negative electrode active material in a charge-discharge cycle more serious, thereby affecting battery performance.

### SUMMARY

The present application aims to at least solve one of technical problems occurring under some circumstances. To that end, one objective of the present application is to provide a battery cell, a battery, and an electric device, to reduce the impact of electrode swelling on battery performance.

In a first aspect, an embodiment of the present application provides a battery cell, including a casing, an electrode assembly, and a support member. The casing is provided with an accommodation cavity. The electrode assembly is disposed in the accommodation cavity and includes a first electrode plate and a second electrode plate arranged according to a preset order in a first direction, the first electrode plate including a first portion overlapping the second electrode plate and a second portion extending beyond the second electrode plate. At least part of the support member is disposed between the electrode assembly and the casing in the first direction, a bending strength of the support member is greater than a bending strength of the first electrode plate, and a projection of the support member in the first direction covers a projection of the second portion in the first direction.

**In** the technical solution of the embodiments of the present application, the support member may relieve or avoid pressure on the second portion of the first electrode plate from the casing to some extent, reducing the probability of bending or breaking of the first electrode plate, thereby improving the reliability of the battery cell.

**In** some embodiments, a second direction is a direction perpendicular to the first direction an outer edge dimension of the support member in the second direction is L2, a maximum dimension of the first electrode plate in the second direction is L1, and L2 > L1. By defining the outer edge dimension of the support member to be greater than the maximum dimension of the first electrode plate in the same direction, the support member may be enabled to completely cover the expanded first electrode plate, preventing, to some extent, the second portion of the first electrode plate from extending to the outside of the support member after expansion and then directly pressing against the casing.

In some embodiments, the outer edge dimension L2 of the support member in the second direction satisfies L2 ≤ 1.05L1. By limiting the dimension of the support member in the second direction, a support effect may be ensured to some extent while a capacity density of the battery cell is ensured.

In some embodiments, the support member includes at least one hollowed-out region and a support portion surrounding the at least one hollowed-out region, and a projection of the support portion in the first direction covers the projection of the second portion in the first direction. By providing the at least one hollowed-out region on the support member, the support function of the support member may be maintained while the weight of the support member is reduced, thereby reducing an energy density loss of the battery cell.

In some embodiments, a minimum dimension of the second electrode plate in the second direction is L3, and a hollow dimension of any one of the at least one hollowed-out region in the second direction is L4, where L4 < L3, and the second direction is perpendicular to the first direction. The hollow dimension of the hollowed-out region in the second direction is less than the minimum dimension of the second electrode plate in the same direction, so that the support portion can overlap the first portion. In this way, a support force may be provided for the support portion, thereby improving the support effect of the support member.

In some embodiments, the support member includes a first surface facing to the electrode assembly, a second surface facing away from the electrode assembly, and an inner end surface connecting the first surface and the second surface, the inner end surface defining the at least one hollowed-out region; the first electrode plate includes a first outer end surface, and the second electrode plate includes a second outer end surface; in the second direction, a minimum distance between the inner end surface and the second outer end surface is P1, and a minimum distance between the first outer end surface and the second outer end surface is P2, where P1/P2 ≥ 25%.

In some embodiments, the inner end surface and the first surface are connected by an inclined surface or an arc surface. A force applied to the first electrode plate in contact with the support member is more uniform, so that a concentrated force applied to the first electrode plate by the support member during expansion of the first electrode plate may be relieved, thereby improving the performance of the battery cell.

In some embodiments, the support member includes the first surface facing to the electrode assembly, the second surface facing away from the electrode assembly, and a third outer end surface connecting the first surface and the second surface, where the third outer end surface and the second surface are connected by an inclined surface or an arc surface. A smooth transition connection between the third outer end surface and the second surface is implemented through the inclined surface or arc surface, so that when the electrode assembly is expanded, the support member and the casing may be in contact with and press against each other with a relatively flat surface at a position where the third outer end surface and the second surface are connected, to facilitate relief of stress concentration.

In some embodiments, a ratio of a thickness of the support member in the first direction to a minimum thickness of the electrode assembly in the first direction in a charge-discharge cycle is greater than or equal to 0.167 and less than or equal to 0.4. The thickness of the support member is defined so that the ratio to the minimum thickness of the electrode assembly in the first direction falls within a value range, enabling the support member to provide sufficient bending resistance while reducing a capacity loss of the battery cell.

In some embodiments, a thickness of the support member in the first direction is greater than or equal to 0.2 millimeter (mm) and less than or equal to 10 millimeters (mm). By properly setting the thickness of the support member, both the bending resistance and the energy density of the battery cell may be ensured, thereby improving the battery performance.

In some embodiments, the support member is fixedly connected to a side surface of the electrode assembly facing to the casing. By fixedly connecting the support member to the side surface of the electrode assembly facing to the casing, relative positions of the support member and the electrode assembly may be maintained, so that the electrode assembly does not get out of a protection range of the support member even in the case of expansion deformation, thereby improving protection reliability of the support member.

In some embodiments, the support member includes a first support member and a second support member, the first support member and the second support member being located on two sides of the electrode assembly facing to the casing in the first direction, respectively. By providing the support members on two sides of the electrode assembly facing to the casing respectively, pressure from the casing on the second portions of the first electrode plate at two ends during expansion of the electrode assembly may be better relieved.

In some embodiments, a material of the support member is stainless steel, and the support member is connected to the electrode assembly in an insulated manner. The stainless steel has relatively high hardness, bending strength, and corrosion resistance, and can well protect the second portion of the first electrode plate.

In some embodiments, the material of the support member is thermosetting plastic. The support member made of thermosetting plastic has relatively high thermal stability and may have an improved support effect. Further, the plastic has a low density and a relatively light weight in the same volume, facilitating the forming of the lightweight battery cell.

In some embodiments, the material of the support member includes one or more of phenolic plastic, epoxy plastic, aminoplast, unsaturated polyester, alkyd plastic, and fiberglass reinforced plastic. Each of the phenolic plastic, epoxy plastic, aminoplast, unsaturated polyester, alkyd plastic, and fiberglass reinforced plastic has strong bending resistance and thermal stability, and can provide a better support function for the first electrode plate.

In some embodiments, the bending strength of the support member is greater than or equal to 50 mega pascals (MPa) and less than or equal to 300 MPa. By properly selecting a range of the bending strength of the support member, both the protection effect of the support member and the economic efficiency of the battery cell may be ensured.

In some embodiments, an energy density of the battery cell is greater than or equal to 360 watts hour (Wh)/kilogram (kg) and less than or equal to 520 Wh/kg. By further defining the energy density of the battery cell, the degree of expansion deformation of the electrode assembly may be controlled to some extent, so that the support member, the electrode assembly, and the casing may better fit with each other, thereby improving the reliability of the battery cell.

In some embodiments, the energy density of the battery cell is greater than or equal to 400 Wh/kg and less than or equal to 500 Wh/kg. By further defining the energy density of the battery cell, the casing and the support member of the battery cell may better adapt to the expansion deformation of the electrode assembly, thereby improving the reliability of the battery cell.

In some embodiments, a mass percentage of a silicon-based material among active substances of the first electrode plate is greater than or equal to 20% and less than or equal to 100%. By optimizing the proportion of the silicon-based material in the negative electrode plate, the energy density of the battery cell may be effectively increased, thereby improving the performance of the battery cell.

In some embodiments, the mass percentage of the silicon-based material among the active substances of the first electrode plate is greater than or equal to 30% and less than or equal to 70%. By further optimizing the proportion of the silicon-based material among the active substances of the negative electrode plate, an expansion dimension of the electrode assembly may better fit with a design dimension of the support member, ensuring the energy density of the battery cell to some extent while improving the stability and reliability of the battery cell.

In a second aspect, an embodiment of the present application provides a battery comprising the battery cell provided in the above embodiments.

In a third aspect, an embodiment of the present application provides an electric device comprising the battery provided in the above embodiment, wherein the battery is used to supply electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application.
FIG. 1 is a schematic diagram of a structure of a vehicle according to some embodiments of the present application;
FIG. 2 is a schematic diagram of a decomposed structure of a battery according to some embodiments of the present application;
FIG. 3 is a schematic diagram of a structure of a battery cell according to some embodiments of the present application;
FIG. 4 is a schematic diagram of a structure of a support member and an electrode plate according to some embodiments of the present application;
FIG. 5 is a schematic diagram of a structure of a support member and an electrode plate according to some other embodiments of the present application;
FIG. 6 is a schematic diagram of a structure in a first direction in FIG. 5;
FIG. 7 is a schematic diagram of a structure of a support member and an electrode plate according to some other embodiments of the present application;
FIG. 8 is a schematic diagram of a structure of a support member according to some embodiments of the present application; and
FIG. 9 is a schematic diagram of a structure of a battery cell according to some other embodiments of the present application.

Description of reference signs:
Vehicle 1000;
Battery 100; Controller 200; Motor 300;
Box 10; First box 11; Second box 12;
Battery cell 20; Casing 21; Electrode assembly 22; Support member 23;
Bottom wall 211; Side wall 212; Rounded corner 213; First electrode plate 221; Second electrode plate 222; Separator 223; First portion 2211; Second portion 2212; Support portion 231; Hollowed-out region 232; First surface 2311; Second surface 2312; Inner end surface 2313;
First outer end surface 221A; Second outer end surface 222A; Third outer end surface 2314;
First direction X; Second direction Y.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

As ions are injected into or extracted from a positive electrode active material and a negative electrode active material during a charge-discharge cycle of a battery, an electrode assembly swells, that is, a positive electrode plate and a negative electrode plate expand outward, due to an accumulative thickness of side reactions of an electrode assembly system, graphite sheet exfoliation, etc. The expansion of the electrode plates imposes adverse impacts on the performance and service life of the battery. Particularly, a silicon-based material is used as the negative electrode active material to increase an energy density of the battery, but the silicon-based negative electrode active material has a more serious problem of expansion in a charge-discharge cycle. For example, the electrode plate of the battery expands and extends significantly during charge and discharge, so that a stack/winding continuously presses against a casing, that is, the electrode assembly continuously presses against and collides with the casing, causing a portion of the negative electrode plate extending beyond the positive electrode plate to be pressed down by the casing, resulting in a severe fold or even breaking, thereby affecting battery performance.

In the embodiments of the present application, a support member may be provided between the electrode assembly and the casing, the support member having a bending strength greater than a bending strength of the electrode plate of the battery. Through the support member, pressure from the casing on the electrode assembly, particularly on the portion of the negative electrode plate extending beyond the positive electrode plate, during expansion of the electrode assembly may be relieved, reducing the probability of bending or breaking of the negative electrode plate, thereby improving the reliability of the battery cell.

The battery cell disclosed in the embodiments of the present application may be, but not limited to, used in an electric device such as a vehicle, a ship, or an aircraft. A power supply system of the electric device can be composed of the battery cell, the battery, and the like disclosed in the present application. This facilitates alleviation of performance deterioration caused by the expansion of the electrode assembly, thereby improving the battery performance stability and the battery life.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

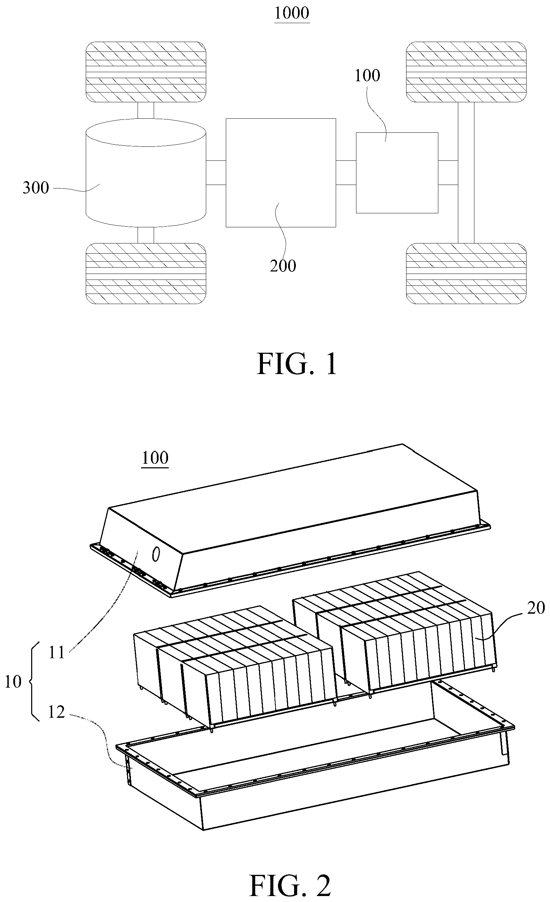

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG. 2 is a schematic diagram of a decomposed structure of a battery 100 according to some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first box 11 and a second box 12, the first box 11 and the second box 12 cover each other, and the first box 11 and the second box 12 jointly define the accommodation space for accommodating the battery cell 20. The second box 12 may be a hollow structure with an opening at one end, the first box 11 may be a plate-shaped structure, and the first box 11 covers an opening side of the second box 12, so that the first box 11 and the second box 12 jointly define the accommodation space. Alternatively, the first box 11 and the second box 12 each may be a hollow structure with an opening at one end, and an opening side of the first box 11 covers an opening side of the second box 12. Certainly, the box 10 formed by the first box 11 and the second box 12 may be in various shapes such as cylinder, rectangular cuboid, etc.

In the battery 100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a current converging component for implementing an electrical connection between the plurality of battery cells 20.

Here, each battery cell 20 may be a secondary battery or a primary battery, or may be a lithium-sulfur battery, a sodium-ion battery, or a magnesium-ion battery, but is not limited thereto. The battery cell 20 may be in the shape of cylinder, flat body, rectangular cuboid, etc.

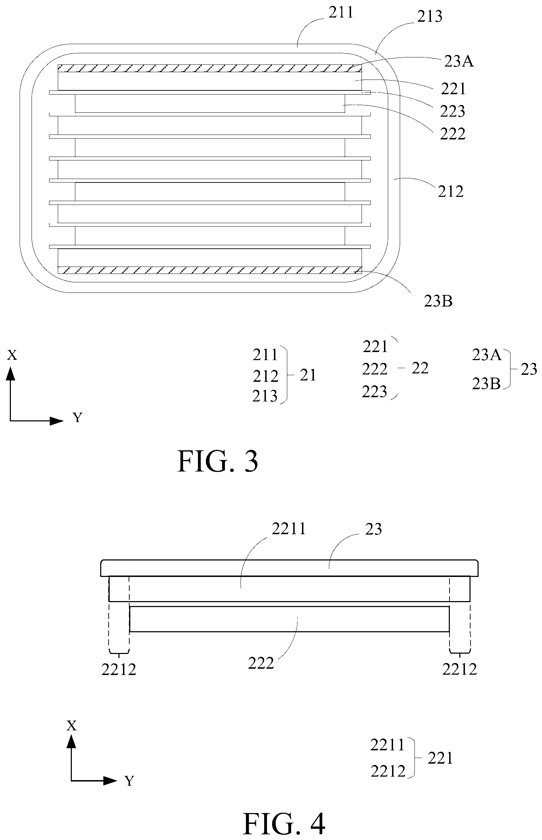

Referring to FIG. 3 and FIG. 4, FIG. 3 is a schematic diagram of a structure of a battery cell 20 according to some embodiments of the present application, and FIG. 4 is a schematic diagram of a structure of a support member and an electrode plate according to some embodiments of the present application. The battery cell 20 refers to a minimum unit constituting a battery. As shown in FIG. 3 and FIG. 4, in some embodiment, the battery cell 20 includes a casing 21, an electrode assembly 22, and other functional components.

The casing 21 is provided with an accommodation cavity. The electrode assembly 22 is disposed in the accommodation cavity and includes a first electrode plate 221 and a second electrode plate 222 arranged according to a preset order in a first direction X, the first electrode plate 221 including a first portion 2211 overlapping the second electrode plate 222 and a second portion 2212 extending beyond the second electrode plate.

The battery cell 20 further includes a support member 23, where at least part of the support member 23 is disposed between the electrode assembly 22 and the casing 21 in the first direction X, a bending strength of the support member 23 is greater than a bending strength of the first electrode plate 221, and a projection of the support member 23 in the first direction X covers a projection of the second portion 2212 in the first direction X.

The casing 21 is an assembly for forming an internal environment of the battery cell 20. Here, the formed internal environment may be used to accommodate the electrode assembly 22, an electrolyte, and other components. The casing 21 includes a side wall 212 and a bottom wall 211 connected to the side wall, the side wall 212 and the bottom wall 211 jointly forming the recessed accommodation cavity. The side wall 212 and the bottom wall 211 may be transitionally connected by a rounded corner. In an example, the accommodation cavity of the casing 21 may be molded by stamping with an aluminum plastic film.

The electrode assembly 22 is a component in the battery cell 20 in which an electrochemical reaction occurs. The casing 21 may include one or more electrode assemblies 22. The electrode assembly 22 is mainly formed by winding or stacking the first electrode plate 221 and the second electrode plate 222, and a separator 223 is generally provided between the first electrode plate 221 and the second electrode plate 222. The first electrode plate 221 may be a negative electrode plate, and the second electrode plate 222 may be a positive electrode plate.

Portions of the first electrode plate 221 and the second electrode plate 222 with active substances constitute an electrode body of the electrode assembly 22, and portions of the first electrode plate 221 and the second electrode plate 222 without active substances each constitute a tab. A positive electrode tab and a negative electrode tab may both be located at an end of the electrode body or be located at two ends of the electrode body respectively. During charge-discharge of a battery, a positive electrode active substance and a negative electrode active substance react with the electrolyte, and the tab is connected to an electrode terminal to form a current circuit.

In the first direction X, the first electrode plates 221 and the second electrode plates 222 are alternately stacked in sequence, and the separator 223 is disposed between the first electrode plate 221 and the second electrode plate 222. In an example, the electrode assembly 22 is a wound cell formed by winding the first electrode plate 221 and the second electrode plate 222. In another example, the electrode assembly 22 may be a stacked cell formed by stacking the first electrode plate 221 and the second electrode plate 222.

The first electrode plate 221 includes a first portion 2211 and a second portion 2212 connected to each other, the first portion 2211 overlapping the second electrode plate 222. "Overlapping" means that a projection of the first portion 2211 in the first direction X overlaps a projection of the second electrode plate 222 in the first direction X. It may be understood that the projection of the first portion 2211 in the first direction X may completely overlap the projection of the second electrode plate 222 in the first direction X, or may overlap a part of the projection of the second electrode plate 222 in the first direction X.

The second portion 2212 is a portion of the first electrode plate 221 extending beyond the second electrode plate 222, and a projection of the second portion 2212 in the first direction X and the projection of the second electrode plate 222 in the same direction are successive without overlap. In other words, the second portion 2212 is actually an overhanging portion extending beyond the second electrode plate 222, so that the first electrode plate 221 can completely cover the second electrode plate 222 to reduce the probability of lithium plating.

The electrode assembly 22 expands and contracts during a charge-discharge cycle, and the expanded electrode assembly 22 presses against the casing 21. Since the second portion 2212 of the first electrode plate 221 is in an overhanging state, the second portion may bend due to a lack of support when pressing against the casing 21. In an example, the electrode assembly 22 in a charge state may expand to deform in the first direction X, and in this case, the second portion 2212 of the first electrode plate 221 may first come into contact with the rounded corner 213 of the casing 21, and then be pressed to bend as the degree of expansion deformation increases. The bending of the electrode plate has an adverse impact on the performance of the electrode assembly 22, and the cyclic expansion and contraction of the electrode assembly 22 may cause the second portion 2212 to bend repeatedly, possibly even causing the second portion 2212 of the first electrode plate 221 to undergo annular cut breaking.

The support member 23 is a structural member having a bending strength, for example, the bending strength of the support member 23 is greater than the bending strength of the first electrode plate 221. The bending strength, also referred to as bending resistance, is used to measure an ability of a member to resist bending and prevent breaking. A greater bending strength indicates a stronger ability of the member to resist bending deformation. In a bending strength test, a sample is placed between two fulcrums, and a force is applied to bend the sample. A bending strength of a material may be calculated by measuring deformation and stress of the sample under a bending load. Commonly used bending test methods include three-point bending test and four-point bending test. In the three-point bending test, a sample is placed between two fulcrums, and a force is applied at the center. In the four-point bending test, a sample is placed between two symmetrical fulcrums, and a force is applied between the two fulcrums.

At least part of the support member 23 is disposed between the electrode assembly 22 and the casing 21 in the first direction X. In an example, the support member 23 may be in the shape of a flat plate and abut on a side surface of the electrode assembly 22 facing to the bottom wall 211 of the casing 21. The projection of the support member 23 in the first direction X covers the projection of the second portion 2212 in the first direction X, so that when the electrode assembly 22 expands, the support member 23 first comes into contact with and presses against the casing 21. In this way, the support member 23 may, to some extent, relieve or avoid pressure on the second portion 2212 of the first electrode plate 221 from the casing 21 in the first direction X.

By providing the support member having a relatively strong bending strength between the electrode assembly 22 and the casing 21, the pressure on the second portion 2212 of the first electrode plate 221 from the casing 21 may be relieved or avoided to some extent, reducing the probability of bending or breaking of the first electrode plate 221, thereby improving the reliability of the battery cell 20.

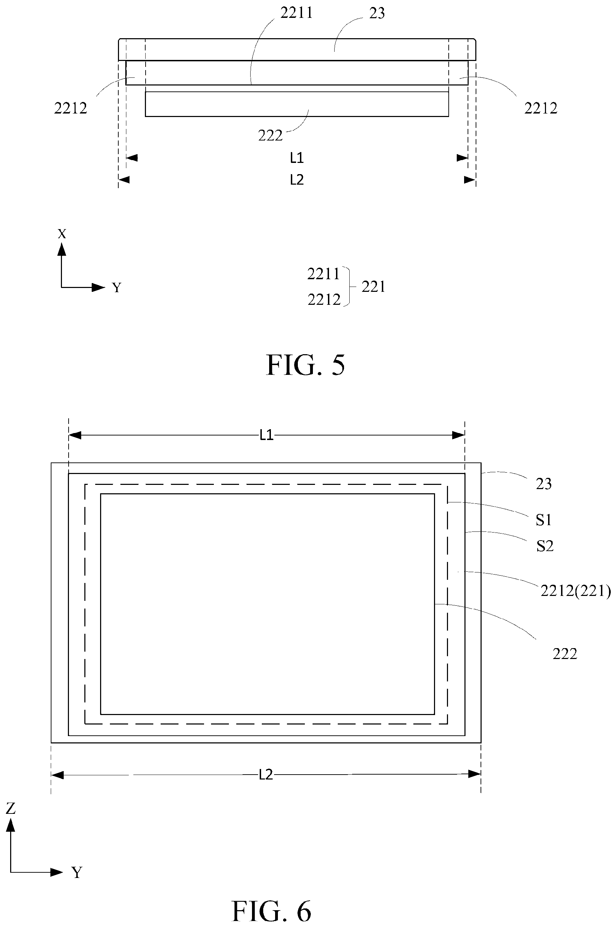

FIG. 5 is a schematic diagram of a structure of a support member and an electrode plate according to some other embodiments of the present application, and FIG. 6 is a schematic diagram of a structure in the first direction X in FIG. 5.

As shown in FIG. 5 and FIG. 6, according to some embodiments of the present application, a second direction Y is a direction perpendicular to the first direction X, an outer edge dimension of the support member 23 in the second direction Y is L2, a maximum dimension of the first electrode plate 221 in the second direction Y is L1, and L2 > L1.

The first direction X is a thickness direction of the first electrode plate 221 and the second electrode plate 222, the second direction Y is perpendicular to the first direction X, and the second direction Y is a direction parallel to a surface of the first electrode plate 221 and the second electrode plate 222, e.g., a length direction or a width direction of the first electrode plate 221 and the second electrode plate 222.

Since the first electrode plate 221 expands and contracts during the charge-discharge cycle, the dimension of the first electrode plate 221 in the second direction Y varies as the charge-discharge proceeds. As shown in FIG. 6, an outer edge of the first electrode plate 221 before charge is S1, and an outer edge of the expanded first electrode plate 221 after charge is S2. The maximum dimension L1 of the first electrode plate 221 in the second direction Y refers to a dimension of the outer edge S2 in the second direction Y when the first electrode plate 221 expands to the maximum extent in the charge-discharge cycle. In an example, the second direction Y is the length direction of the electrode plate, in which case the outer edge dimension L2 of the support member 23 refers to a length dimension of the support member 23, and the maximum dimension L1 of the first electrode plate 221 is a maximum length after expansion. It may be understood that the second direction Y may alternatively be the width direction of the electrode plate, for example, a direction indicated by direction Z in FIG. 6.

By defining the outer edge dimension of the support member 23 in the second direction Y to be greater than the maximum dimension of the first electrode plate 221 in the same direction, the support member 23 may be enabled to completely cover the expanded first electrode plate 221, preventing, to some extent, the second portion 2212 of the first electrode plate 221 from extending to the outside of the support member 23 after expansion and then directly pressing against the casing 21.

According to some embodiments of the present application, the outer edge dimension L2 of the support member 23 in the second direction Y satisfies L2 ≤ 1.05L1.

The larger the second dimension of the support member 23 in the second direction Y, the larger a capacity density loss of the battery cell. Therefore, it is required to limit the dimension of the support member 23 in the second direction Y, so as to provide a support effect while a capacity density of the battery cell is ensured.

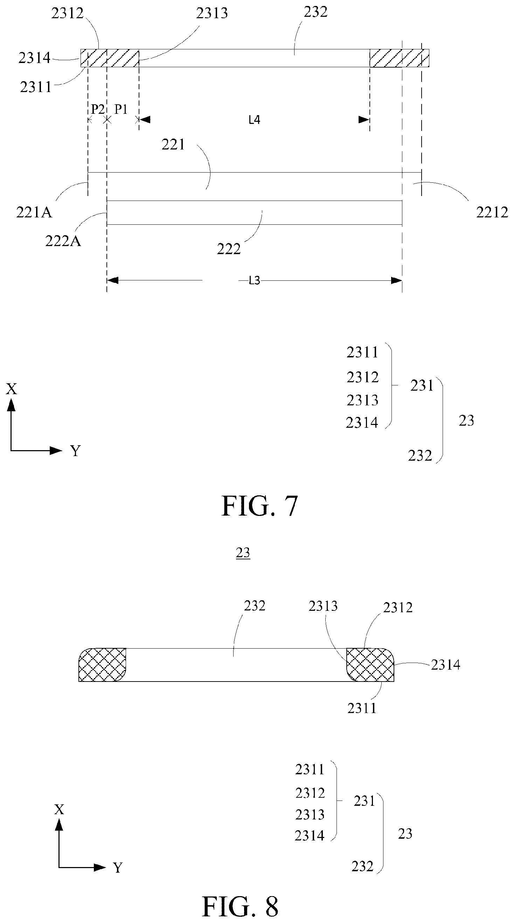

FIG. 7 is a schematic diagram of a structure of a support member and an electrode plate according to some other embodiments of the present application. According to some embodiments of the present application, as shown in FIG. 7, the support member 23 includes at least one hollowed-out region 232 and a support portion 231 surrounding the at least one hollowed-out region 232, and a projection of the support portion 231 in the first direction X covers the projection of the second portion 2212 in the first direction X.

The hollowed-out region 232 refers to a region penetrating through the support member 23 in the first direction X. There may be one or a plurality of hollowed-out regions 232, for example, a plurality of hollowed-out regions 232 arranged at intervals. The hollowed-out region 232 may be in any shape, e.g., a circle, a square, etc. The projection of the support member 231 in the first direction X covers the projection of the second portion 2212 in the first direction X, so that a range of the projection of the second portion 2212 on the support member 23 in the first direction X completely falls within a range of the support member 231. In an example, the support member 23 is in the shape of a centrally hollowed-out frame.

By providing the at least one hollowed-out region 232 on the support member 23, the support function of the support member may be maintained while the weight of the support member 23 is reduced, thereby reducing an energy density loss of the battery cell.

According to some embodiments of the present application, a minimum dimension of the second electrode plate 222 in the second direction Y is L3, and a hollow dimension of any one of the at least one hollowed-out region 232 in the second direction Y is L4, where L4 < L3, and the second direction Y is perpendicular to the first direction X.

Since the second electrode plate 222 overlaps the first portion 2211 of the first electrode plate 221, the dimension of the second electrode plate 222 in the second direction Y is actually a dimension of the first portion 2211 in the second direction Y. The minimum dimension L3 of the second electrode plate 222 in the second direction Y refers to a minimum dimension of the second electrode plate 222 in the second direction Y in the charge-discharge cycle. The hollow dimension L4 of the hollowed-out region 232 in the second direction Y being less than L3 means that at least part of the support portion 231 has a projection in the first direction X overlapping the first portion 2211 of the first electrode plate 221.

In this embodiment, the dimension of the hollowed-out region 232 in the second direction Y is less than the minimum dimension of the second electrode plate 222 in the same direction, so that the support portion 231 can overlap the first portion 2211. In this way, a support force may be provided for the support portion 231, thereby improving the support effect of the support member 23.

According to some embodiments of the present application, the support portion 231 of the support member 23 includes a first surface 2311 facing to the electrode assembly 22, a second surface 2312 facing away from the electrode assembly 22, and an inner end surface 2313 connecting the first surface 2311 and the second surface 2312, the inner end surface 2313 defining the at least one hollowed-out region 232. The first electrode plate 221 includes a first outer end surface 221A, and the second electrode plate 222 includes a second outer end surface 222A. In the second direction Y, a minimum distance between the inner end surface 2313 and the second outer end surface 222A is P1, and a minimum distance between the first outer end surface 221A and the second outer end surface 222A is P2, where P1/P2 ≥ 25%.

The inner end surface 2313 is a surface located between the first surface 2311 and the second surface 2312 and facing to the hollowed-out region 232. The first outer end surface 221A is an outer end surface of the first electrode plate 221 in the thickness direction, and the second outer end surface 222A is an outer end surface of the second electrode plate 222 in the thickness direction.

As shown in FIG. 7, the minimum distance P1 between the inner end surface 2313 and the second outer end surface 222A is actually a minimum dimension by which a portion of the support member 231 extending from the inner end surface to the outer end surface overlaps the second electrode plate 222 or the first portion 2211 of the first electrode plate 221 in the second direction Y. The minimum distance P2 between the first outer end surface 221A and the second outer end surface 222A is a minimum dimension of a portion of an end of the first electrode plate 221 extending beyond the second electrode plate 222 in the second direction Y, and is also a minimum dimension of the second portion 2212 at the end of the first electrode plate 221 in the second direction Y.

In this embodiment, P1 and P2 satisfy P1/P2 ≥ 25%. For example, it may be P1 = 25%P2, so that a sufficient contact area can be formed between the support portion 231 and the first portion 2211 of the first electrode plate 221, to provide a sufficient support force for the support member 23. In an example, P1 may also be equal to 30%P2, 50%P2, or 100%P2.

Since the second portion 2211 of the first electrode plate 221 is in an overhanging state, it is substantially incapable of providing a support force for the support member 23. Moreover, the support member 23 is provided to prevent or reduce the transfer of a pressure force from the casing to the second portion 2212 to some extent, and therefore a support force can be provided through a contact between the first portion 2212 of the first electrode plate 221 and the support member 23. By defining a range of the ratio between P1 and P2, a sufficient contact area may be formed between the first portion 2211 of the first electrode plate 221 and the support member 23 to provide a sufficient support force for the support member 23. Larger P1 means a larger width of the support portion 231 and a smaller hollowed-out region 232, which facilitates the improvement of overall deformation resistance of the support member 23.

FIG. 8 is a schematic diagram of a structure of a support member 23 according to some embodiments of the present application. According to some embodiments of the present application, as shown in FIG. 8, the inner end surface 2313 and the first surface 2311 are connected by an inclined surface or an arc surface.

The inclined surface may be an inclined surface formed by chamfering between the inner end surface 2313 and the first surface 2311, and the arc surface may be an arc surface formed by rounding between the inner end surface 2313 and the first surface 2311.

The first electrode plate 221 expands due to injection of lithium ions during charge, where the first portion 2211 receives more lithium ions than the second portion 2212 because it overlaps the second electrode plate 222, and thus has a higher degree of expansion than the second portion 2212. The inner end surface 2313 and the first surface 2311 being connected by the inclined surface or the arc surface may achieve a smooth transition connection. In this way, a force applied to the first electrode plate 221 in contact with the support member 23 is more uniform, so that a concentrated force applied to the first electrode plate 221 by the support member 23 during expansion of the first electrode plate 221 may be relieved, thereby improving the performance of the battery cell 20.

According to some embodiments of the present application, as shown in FIG. 8, the support member 23 further includes a third outer end surface 2314 connecting the first surface 2311 and the second surface 2312, and the third outer end surface 2314 and the second surface 2312 are connected by an inclined surface or an arc surface.

The third outer end surface 2314 is an outer end surface opposite the inner end surface 2313, the inclined surface may be an inclined surface formed by chamfering between the third outer end surface 2314 and the second surface 2312, and the arc surface may be an arc surface formed by rounding between the third outer end surface 2314 and the second surface 2312.

A smooth transition connection between the third outer end surface 2314 and the second surface 2312 is implemented through the inclined surface or arc surface, so that when the electrode assembly 22 is expanded, the support member 23 and the casing 21 may be in contact with and press against each other with a relatively flat surface at a position where the third outer end surface 2314 and the second surface 2312 are connected, to facilitate relief of stress concentration.

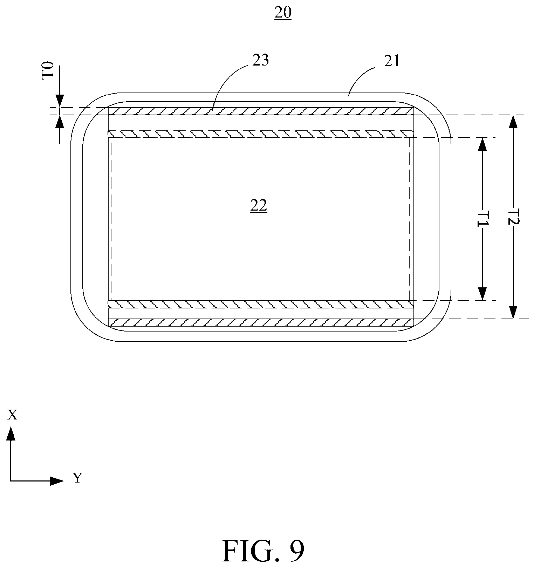

FIG. 9 is a schematic diagram of a structure of a battery cell 20 according to some other embodiments of the present application. According to some embodiments of the present application, as shown in FIG. 9, a ratio of a thickness T0 of the support member 23 in the first direction X to a minimum thickness of the electrode assembly 22 in the first direction in a charge-discharge cycle is greater than or equal to 0.167 and less than or equal to 0.4.

The minimum thickness T1 is a minimum thickness of the electrode assembly 22 in the first direction X in the charge-discharge cycle, and the maximum thickness T2 is a maximum thickness of the electrode assembly 22 in the first direction X in the charge-discharge cycle. As shown in FIG. 9, the thickness of the electrode assembly 22 in the first direction X increases from the minimum thickness T1 to the maximum thickness T2 in the charge-discharge cycle, and then the thickness of the electrode assembly 22 in the first direction X decreases from the maximum thickness T2 to the minimum thickness T1 during discharge. Therefore, a maximum expansion thickness is (T2-T1).

It may be understood that the support member 23 may be in the shape of a flat plate with a uniform thickness, the thickness of which in the first direction X is a uniform thickness T0. The inclined surfaces or arc surfaces between the third outer end surface 2314 and the second surface 2312 and between the inner end surface 2313 and the first surface 2311 are merely variations at local connections, which do not substantially affect the thickness of the support member 23.

In the case where other conditions are fixed, when the thickness of the electrode assembly 22 is larger, the maximum expansion thickness (T2-T1) of the electrode assembly in the first direction X is larger, in which case the casing 21 presses against the second portion 2212 of the first electrode plate 221 more strongly, imposing a higher requirement on the bending resistance of the support member 23. In the case of a fixed material, the larger the thickness of the support member 23, the stronger the bending resistance of the support member. However, if the thickness of the support member 23 is excessively large, the capacity loss of the battery cell 20 is relatively large, which is disadvantageous to the improvement of the energy density of the battery cell 20.

In an example, the minimum thickness T1 of the electrode assembly 22 ranges from 0.5 mm to 60 mm, and a ratio of the maximum expansion thickness (T2-T1) in the charge-discharge cycle to the minimum thickness T1 of the electrode assembly 22 is an expansion variation rate of the electrode assembly 22, with a value ranging from 5% to 45%. The thickness T0 of the support member 23 may be selected according to the magnitude of the minimum thickness of the electrode assembly 22, and may be further adjusted in combination with the material and the bending strength of the support member 23, so that the thickness of the support member 23 satisfies a support requirement while the capacity loss of the battery cell 20 is minimized.

When the proportion of a high-expansion material in the first electrode plate 221 of the electrode assembly 22 is higher, the electrode assembly has larger expansion deformation during charge, and therefore the degree of pressure between the electrode assembly 22 and the casing 21 is higher, resulting in higher possibility of bending or even breaking of the second portion 2212 of the first electrode plate 221 due to the pressure. Accordingly, the support member 23 is required to have a stronger bending strength to alleviate the bending of the second portion 2212 of the first electrode plate 221. The thickness of the support member 23 is positively correlated to the bending strength thereof, and the ratio of the thickness T0 of the support member 23 to the minimum thickness T1 of the electrode assembly 22 in the first direction in the charge-discharge cycle is set to satisfy 0.167 ≤ T0/T1 ≤ 0.4, so that the support member has a sufficient bending strength, relieving the pressure on the first electrode plate 221 from the casing 21 while reducing the capacity loss of the battery cell 20.

According to some embodiments of the present application, the thickness of the support member 23 in the first direction X is greater than or equal to 0.2 millimeter (mm) and less than or equal to 10 millimeters (mm).

In some embodiments, the support member 23 is in the shape of a flat plate with a uniform thickness, and the thickness of the support member 23 may be negatively correlated to an elasticity modulus thereof. For example, when the elasticity modulus is larger, a relatively small thickness may be, and by contrast, when the elasticity modulus is smaller, a larger thickness needs to be set, so as to ensure, to some extent, that the support member 23 has sufficient bending resistance.

By properly setting the thickness of the support member 23, both the bending resistance and the energy density of the battery cell 20 may be ensured, thereby improving the battery performance.

According to some embodiments of the present application, the support member 23 is fixedly connected to a side surface of the electrode assembly 22 facing to the casing 21.

The support member 23 may be fixedly connected to the side surface of the electrode assembly 22 facing to the casing 21, for example, the support member 23 may be fixedly connected to the surface of the electrode assembly 22 by means of adhesion.

By fixedly connecting the support member 23 to the side surface of the electrode assembly 22 facing to the casing 21, relative positions of the support member 23 and the electrode assembly 22 may be maintained, so that the electrode assembly 22 does not get out of a support range of the support member 23 even in the case of expansion deformation, thereby improving protection reliability of the support member.

In some embodiments, as shown in FIG. 3, the support member 23 includes a first support member 23A and a second support member 23B, the first support member 23A and the second support member 23B being located on two sides of the electrode assembly 22 facing to the casing 21 in the first direction X, respectively.

The first support member 23A and the second support member 23B are located on the two sides of the electrode assembly 22 in the first direction X respectively, and the first support member 23A and the second support member 23B may be of the same material and structural form or different materials and structural forms. In an example, the first support member 23A may be in the shape of a flat plate, and the second support member 23B be in the shape of a frame.

By providing the support members 23 on two sides of the electrode assembly 22 facing to the casing 21 respectively, pressure from the casing 21 on the second portions 2212 of the first electrode plate 221 at two ends during expansion of the electrode assembly 22 may be better relieved, thereby further improving the structural stability of the battery cell 20.

According to some embodiments of the present application, a material of the support member 23 is stainless steel, and the support member 23 is connected to the electrode assembly 22 in an insulated manner.

Since the stainless steel has electrical conductivity, the support member 23 made of it needs to be connected to the electrode assembly 22 in the insulated manner. In an example, the support member 23 may be connected to the electrode assembly 22 in the insulated manner through an insulating adhesive layer.

The stainless steel has relatively high hardness, bending strength, and corrosion resistance, and can well protect the second portion of the first electrode plate. Moreover, the support member 23 made of stainless steel may be set appropriately thinner to reduce the weight and volume thereof, facilitating the increase of the energy density of the battery.

According to some embodiments of the present application, the material of the support member 23 is thermosetting plastic.

The thermosetting plastic uses thermosetting resin as a main component, which is combined with various necessary additives to form plastic of a product through cross-linking curing. The thermosetting plastic is featured by being hardened through a chemical reaction after heating and pressurizing for a period of time or hardening agent adding under a temperature. The hardened plastic has a changed chemical structure and a hard texture, is insoluble in a solvent, and is unable to be softened by heating.

Since the electrode assembly 22 generates heat during the charge-discharge cycle, the support member 23 made of the thermosetting plastic has relatively high thermal stability and may have an improved support effect. Further, the plastic has a low density and a relatively light weight in the same volume, facilitating the forming of the lightweight battery cell 20.

According to some embodiments of the present application, the material of the support member 23 may include one or more of a phenolic plastic, epoxy plastic, aminoplast, unsaturated polyester, alkyd plastic, and fiberglass reinforced plastic.

Each of the phenolic plastic, epoxy plastic, aminoplast, unsaturated polyester, alkyd plastic, and fiberglass reinforced plastic has strong bending resistance and thermal stability, and can provide a better support function for the first electrode plate 221.

According to some embodiments of the present application, the bending strength of the support member 23 is greater than or equal to 50 MPa and less than or equal to 300 MPa.

The bending strength of the support member 23 is directly related to the protection effect of the support member 23 for the second portion 2212 of the first electrode plate 221. If having an excessively weak bending strength, the support member 23 may have large deformation when pressing against the casing 21 and thus fail to satisfy the requirement for protecting the first electrode plate 221. An excessively strong bending strength means a surplus material property, which is disadvantageous to the economic efficiency of the battery.

By properly selecting a range of the bending strength of the support member 23, both the protection effect of the support member 23 and the economic efficiency of the battery cell 20 may be ensured.

In some embodiments, the energy density of the battery cell 20 is greater than or equal to 360 Wh/kg (watt hour/kilogram) and less than or equal to 520 Wh/kg (watt hour/kilogram).

The energy density refers to energy discharged by the battery per unit mass or per unit volume, i.e., volume specific energy or mass specific energy. In this embodiment, the energy density of the battery cell 20 refers to mass specific energy. In some embodiments, the energy density of the battery cell 20 may be detected with reference to a test method recited in IEC 62660. It may also be determined with reference to the following test method: in a room-temperature environment (25 °C ± 2 °C, relative humidity of 15% to 90%, atmospheric pressure of 86 kPa to 106 kPa), a test is performed with the following steps: (1) performing constant-current discharge to an end voltage at a set current, and letting it stand for more than 30 minutes; (2) performing constant-current charge to a battery charge cut-off voltage at a set current I, then proceeding with constant-voltage charge until the current decreases to 0.05I, and letting it stand for more than 30 minutes; (3) repeating step (1) and step (2) three times; (4) recording charge/discharge energy of the battery in the step (3); (5) measuring a mass of the battery using a weighing apparatus; and (6) calculating the energy density of the battery based on the charge/discharge energy and the mass.

**In** some embodiments, when the energy density of the battery cell 20 is higher, the amount of a high-expansion material among active substances of the electrode plate is larger, making the degree of expansion of the electrode assembly 22 higher, resulting in more serious problems of collision and pressure between the electrode assembly 22 and the casing 21.

The energy density of the battery cell 20 has a direct impact on the degree of expansion of the electrode assembly 22 in the charge-discharge cycle. By further defining the energy density of the battery cell 20, the degree of expansion deformation of the electrode assembly 22 may be controlled to some extent, so that the support member 23, the electrode assembly 22, and the casing 21 may better fit with each other, thereby improving the reliability of the battery cell 20.

In some embodiments, the energy density of the battery cell 20 is greater than or equal to 400 Wh/kg and less than or equal to 500 Wh/kg.

By further defining the energy density of the battery cell 20, the casing 21 and the support member 23 of the battery cell 20 may better adapt to the expansion deformation of the electrode assembly 22, thereby improving the reliability of the battery cell 20.

In some embodiments, a mass percentage of a silicon-based material among the active substances of the first electrode plate 221 is greater than or equal to 20% and less than or equal to 100%.

The first electrode plate 221 is a negative electrode plate, and the active substances of the first electrode plate 221 may include a high-expansion material, and in some embodiments, the high-expansion material may be a silicon-based material. The silicon-based negative electrode material has advantages such as a high theoretical specific capacity, a low delithiation potential, environmental friendliness, an abundant reserve, and a low cost. Silicon expands more easily during charge and discharge because a silicon crystal has a regular tetrahedral structure (graphite has a layered structure).

The silicon-based material may be selected from at least one of elemental silicon, a silicon-oxygen compound, a silicon-carbon composite, a silicon-nitrogen composite, and silicon alloy. The elemental silicon may be pure silicon, such as a silicon nanoparticle, a silicon nanowire, and a silicon nanotube with nanometer-level dimensions. The silicon-oxygen compound may be silicon monoxide (SiOx) of a composite of silicon and silicon dioxide. The silicon-carbon composite may be a silicon-carbon complex (Si/C) formed by coating the surface of silicon with carbon. The silicon-nitrogen composite may be a composite of silicon monoxide and nitrogen-doped carbon, a silicon-carbon nitride composite, or a composite material of carbon coated with nano silicon nitrogen.

The use of the silicon-based material as the negative electrode material of the battery cell can improve the energy density of the battery cell and improve the battery performance. By optimizing the proportion of the silicon-based material in the negative electrode plate, the energy density of the battery cell may be effectively increased, thereby improving the performance of the battery cell.

In some embodiments, the mass percentage of the silicon-based material among the active substances of the first electrode plate 221 is greater than or equal to 30% and less than or equal to 70%.

By further optimizing the proportion of the silicon-based material among the active substances of the first electrode plate 221, an expansion dimension of the electrode assembly 22 may better fit with a design dimension of the support member 23, ensuring the energy density of the battery cell to some extent while improving the stability and reliability of the battery cell.

In a second aspect, an embodiment of the present application provides a battery 100 including the battery cell 20 provided in the above embodiments.

In a third aspect, an embodiment of the present application provides an electric device including the battery 100 or battery cell 20 provided in the above embodiments, and the battery 100 or battery cell 20 is used to supply electric energy.

The battery cell 20 of the present application is further described in detail below with reference to a specific embodiment.

The battery cell 20 includes a casing 21, an electrode assembly 22, and other functional components.

The casing 21 is provided with an accommodation cavity. The electrode assembly 22 is disposed in the accommodation cavity and includes a first electrode plate 221 and a second electrode plate 222 arranged according to a preset order in a first direction X, and a separator 223 between the first electrode plate 221 and the second electrode plate 222, the first electrode plate 221 including a first portion 2211 overlapping the second electrode plate 222 and a second portion 2212 extending beyond the second electrode plate.

The battery cell 20 further includes a support member 23, where at least part of the support member 23 is disposed between the electrode assembly 22 and the casing 21 in the first direction X, a bending strength of the support member 23 is greater than a bending strength of the first electrode plate 221, and a projection of the support member 23 in the first direction X covers a projection of the second portion 2212 in the first direction X.

A second direction Y is a direction perpendicular to the first direction X, an outer edge dimension of the support member 23 in the second direction is L2, a maximum dimension of the first electrode plate 221 in the second direction Y is L1, and L1 < L2 ≤ 1.05L1.

The support member 23 may be in the shape of a flat plate or a frame. In an example, the support member 23 includes at least one hollowed-out region 232 and a support portion 231 surrounding the at least one hollowed-out region 232, and a projection of the support portion 231 in the first direction X covers the projection of the second portion 2212 in the first direction X. A minimum dimension of the second electrode plate 222 in the second direction Y is L3, and a hollow dimension of any one of the at least one hollowed-out region 232 in the second direction Y is L4, where L4 < L3.

The support portion 231 of the support member 23 includes a first surface 2311 facing to the electrode assembly 22, a second surface 2312 facing away from the electrode assembly 22, an inner end surface 2313 connecting the first surface 2311 and the second surface 2312, and a third outer end surface 2014 connecting the first surface 2311 and the second surface 2312. The first electrode plate 221 includes a first outer end surface 221A, and the second electrode plate 222 includes a second outer end surface 222A. In the second direction Y, a minimum distance between the inner end surface 2313 and the second outer end surface 222A is P1, and a minimum distance between the first outer end surface 221A and the second outer end surface 222A is P2, where P1/P2 ≥ 25%.

The inner end surface 2313 is connected to the first surface 2311 by an inclined surface or an arc surface, and the third outer end surface 2314 is connected to the second surface 2312 by an inclined surface an arc surface.

A ratio of a thickness T0 of the support member 23 in the first direction X to a minimum thickness T1 of the electrode assembly 22 in the first direction X in a charge-discharge cycle satisfies 0.167 ≤ T0/T1 ≤ 0.4. In some embodiments, the thickness of the support member 23 in the first direction X is greater than or equal to 0.2 millimeter (mm) and less than or equal to 10 millimeters (mm).

A material of the support member 23 may be stainless steel or thermosetting plastic. The bending strength of the support member 23 is greater than or equal to 50 MPa and less than or equal to 300 MPa.

An energy density of the battery cell 20 is greater than or equal to 400 Wh/kg and less than or equal to 500 Wh/kg. A mass percentage of a silicon-based material among active substances of the first electrode plate 221 is greater than or equal to 30% and less than or equal to 70%.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery cell, comprising:
a casing provided with an accommodation cavity;
an electrode assembly disposed in the accommodation cavity, wherein the electrode assembly comprises a first electrode plate and a second electrode plate arranged according to a preset order in a first direction, the first electrode plate comprising a first portion overlapping the second electrode plate and a second portion extending beyond the second electrode plate; and
a support member, where at least part of the support member is disposed between the electrode assembly and the casing in the first direction, a bending strength of the support member is greater than a bending strength of the first electrode plate, and a projection of the support member in the first direction covers a projection of the second portion in the first direction.

2. The battery cell according to claim 1, wherein a second direction is a direction perpendicular to the first direction an outer edge dimension of the support member in the second direction is L2, a maximum dimension of the first electrode plate in the second direction is L1, and L2 > L1.

3. The battery cell according to claim 2, wherein the outer edge dimension of the support member in the second direction satisfies L2 ≤ 1.05L1.

4. The battery cell according to any one of claims 1 to 3, wherein the support member comprises at least one hollowed-out region and a support portion surrounding the at least one hollowed-out region, and a projection of the support portion in the first direction covers the projection of the second portion in the first direction.

5. The battery cell according to claim 4, wherein a minimum dimension of the second electrode plate in the second direction is L3, and a hollow dimension of any one of the at least one hollowed-out region in the second direction is L4, wherein L4 < L3, and the second direction is perpendicular to the first direction.

6. The battery cell according to claim 4 or 5, wherein the support member comprises a first surface facing to the electrode assembly, a second surface facing away from the electrode assembly, and an inner end surface connecting the first surface and the second surface, the inner end surface defining the at least one hollowed-out region;
the first electrode plate comprises a first outer end surface, and the second electrode plate comprises a second outer end surface;
in the second direction perpendicular to the first direction, a minimum distance between the inner end surface and the second outer end surface is P1, and a minimum distance between the first outer end surface and the second outer end surface is P2, wherein P1/P2 ≥ 25%.

7. The battery cell according to claim 6, wherein the inner end surface and the first surface are connected by an inclined surface or an arc surface.

8. The battery cell according to any one of claims 1 to 7, wherein the support member comprises the first surface facing to the electrode assembly, the second surface facing away from the electrode assembly, and a third outer end surface connecting the first surface and the second surface,
wherein the third outer end surface and the second surface are connected by an inclined surface or an arc surface.

9. The battery cell according to any one of claims 1 to 8, wherein a ratio of a thickness of the support member in the first direction to a minimum thickness of the electrode assembly in the first direction in a charge-discharge cycle is greater than or equal to 0.167 and less than or equal to 0.4.

10. The battery cell according to any one of claims 1 to 9, wherein a range of a thickness of the support member in the first direction is greater than or equal to 0.2 mm and less than or equal to 10 mm.

11. The battery cell according to any one of claims 1 to 10, wherein the support member is fixedly connected to a side surface of the electrode assembly facing to the casing.

12. The battery cell according to any one of claims 1 to 11, wherein the support member comprises a first support member and a second support member, the first support member and the second support member being located on two sides of the electrode assembly facing to the casing in the first direction, respectively.

13. The battery cell according to any one of claims 1 to 12, wherein a material of the support member is stainless steel, and the support member is connected to the electrode assembly in an insulated manner.

14. The battery cell according to any one of claims 1 to 13, wherein the material of the support member is thermosetting plastic.

15. The battery cell according to claim 14, wherein the material of the support member comprises one or more of phenolic plastic, epoxy plastic, aminoplast, unsaturated polyester, alkyd plastic, and fiberglass reinforced plastic.

16. The battery cell according to any one of claims 1 to 15, wherein the bending strength of the support member is greater than or equal to 50 MPa and less than or equal to 300 MPa.

17. The battery cell according to any one of claims 1 to 16, wherein an energy density of the battery cell is greater than or equal to 360 Wh/kg and less than or equal to 520 Wh/kg.

18. The battery cell according to claim 17, wherein the energy density of the battery cell is greater than or equal to 400 Wh/kg and less than or equal to 500 Wh/kg.

19. The battery cell according to any one of claims 1 to 18, wherein a mass percentage of a silicon-based material among active substances of the first electrode plate is greater than or equal to 20% and less than or equal to 100%.

20. The battery cell according to claim 19, wherein the mass percentage of the silicon-based material among the active substances of the first electrode plate is greater than or equal to 30% and less than or equal to 70%.

21. A battery, comprising the battery cell according to any one of claims 1 to 20.

22. An electric device, comprising the battery cell according to any one of claims 1 to 20 or the battery according to claim 21, wherein the battery cell or the battery is used to supply electric energy.
